# FASCICULE DE BREVET EUROPEEN

(11) **EP 0 991 531 B1**
(45) Date de publication et mention de la délivrance du brevet: **05.12.2001**
(21) Numéro de dépôt: 98939527.2
(22) Date de dépôt: 24.06.1998
(51) Int. Cl.: B60C 9/22, B60C 9/20

(54) **ARMATURE DE SOMMET POUR PNEUMATIQUE RADIAL**
VERSTÄRKUNGSGÜRTEL FÜR REIFEN
RADIAL TYRE TOP REINFORCEMENT

(30) Priorité: 26.06.1997 FR 9708321
(43) Date de publication de la demande: 12.04.2000
(73) Titulaire: Compagnie Générale des Etablissements MICHELIN-MICHELIN & CIE, 63040 Clermont-Ferrand Cedex 09 (FR)
(72) Inventeur: HERBELLEAU, Yves, F-63200 Riom (FR)
(74) Mandataire: Dequire, Philippe Jean-Marie Denis
(86) Numéro de dépôt international: EP9803860
(87) Numéro de publication internationale: WO9900260

(56) Documents cités:
- EP-A- 0 353 659
- EP-A- 0 400 859
- EP-A- 0 463 875
- FR-A- 2 446 193
- FR-A- 2 624 063
- GB-A- 2 201 925
- US-A- 2 939 502
- PATENT ABSTRACTS OF JAPAN vol. 018, no. 245 (M-1603), 11 mai 1994 & JP 06 032111 A (BRIDGESTONE CORP), 8 février 1994

## Description

La présente invention concerne les pneumatiques à armature de carcasse radiale, et particulièrement la protection de leur armature de sommet.

Les pneumatiques destinés à rouler dans des conditions difficiles, par exemple sur des sols comportant des cailloux ou objets coupants présentent usuellement une armature de sommet comprenant un bloc de travail et radialement extérieurement un bloc de protection. Le bloc de travail est destiné à reprendre les efforts dus au gonflage et au roulage du pneumatique et comprend au moins deux nappes superposées de fils parallèles dans chaque nappe et croisés d'une nappe à la suivante en faisant avec la direction circonférentielle des angles (α, β) compris entre 10° et 45°. Le bloc de protection est destiné à protéger les nappes du bloc de travail des dommages dus aux chocs et perforations subis en utilisation et comprend au moins une nappe de fils parallèles. Ces fils ont souvent un allongement à la rupture supérieur à celui des nappes de travail qu'ils protègent.

Pour améliorer l'endurance de l'armature de sommet d'un tel pneumatique, la demande WO96/20095 divulgue un pneumatique comprenant un sommet, deux flancs et deux bourrelets, une armature de carcasse ancrée dans les deux bourrelets et une armature de sommet, ladite armature de sommet comprenant radialement de l'intérieur vers l'extérieur, un bloc de travail avec au moins une nappe de fils parallèles d'orientation circonférentielle et un bloc de protection avec au moins une nappe de fils parallèles d'allongement à la rupture supérieur à celui des fils de la nappe d'orientation circonférentielle du bloc de travail, dans lequel ledit bloc de travail comprend radialement de l'intérieur vers l'extérieur une nappe de triangulation de fils métalliques orientés à au moins 60°, deux nappes de travail formées de fils métalliques inextensibles orientés à des angles compris entre 10 et 45° et de ladite nappe de fils parallèles d'orientation circonférentielle du bloc de travail disposée entre les deux nappes de travail, et dans lequel les fils de la nappe du bloc de protection ont une orientation similaire à celle des fils de la nappe de travail adjacente du bloc de travail.

L'invention a pour objet une autre architecture de pneumatique permettant aussi d'améliorer substantiellement l'endurance de l'armature de sommet et notamment sa résistance aux chocs, perforations et oxydations dus à des roulages sur des sols comportant des cailloux coupants.

Dans ce qui suit, on entend par :
- « fil », aussi bien des monofilaments que des multifilaments, ou des assemblages comme des câbles, des retors ou bien encore n'importe quel type d'assemblage équivalent, et ceci, quels que soient la matière et le traitement de ces fils, par exemple traitement de surface ou enrobage ou préencollage pour favoriser l'adhésion sur le caoutchouc ;
- « fil métallique inextensible », un fil ayant un allongement relatif inférieur à 0,2% mesuré sous 10% de sa force de rupture ;
- « fil métallique élastique », un fil ayant un allongement relatif supérieur à 0,5% mesuré à 10% de sa force de rupture ;
- « un fil orienté circonférentiellement », un fil orienté sensiblement parallèlement à la direction circonférentielle du pneumatique, c'est-à-dire faisant avec cette direction un angle compris dans l'intervalle +2,5°, -2,5° autour de 0° ;
- « un fil orienté radialement », un fil contenu sensiblement dans un même plan axial ou dans un plan faisant avec un plan axial un angle inférieur ou égal à 10°.

Le pneumatique, selon l'invention, comprend un sommet, deux flancs et deux bourrelets, une armature de carcasse ancrée dans les deux bourrelets et une armature de sommet. L'armature de sommet comprend radialement de l'intérieur vers l'extérieur un bloc de travail et un bloc de protection. Le bloc de travail a au moins deux nappes de travail superposées formées de fils parallèles dans chaque nappe et croisés d'une nappe à la suivante en faisant avec la direction circonférentielle des angles (α, β) compris entre 10° et 45° et une nappe de fils parallèles d'orientation circonférentielle. Le bloc de protection a au moins une nappe de fils parallèles d'allongement à la rupture supérieur à celui des fils de la nappe d'orientation circonférentielle du bloc de travail. Ce pneumatique est caractérisé en ce que la nappe de fils parallèles d'orientation circonférentielle est la nappe du bloc de travail disposée radialement le plus à l'extérieur, en ce que les fils parallèles de la nappe du bloc de protection ont une orientation circonférentielle et en ce que la nappe de fils parallèles d'orientation circonférentielle du bloc de travail a une largeur axiale inférieure à la largeur axiale de la moins large des nappes de travail ainsi qu'à la largeur axiale de la nappe de fils d'orientation circonférentielle du bloc de protection.

L'orientation circonférentielle de la nappe de protection et de la nappe adjacente du bloc de travail ainsi que le fait que la nappe de l'armature de sommet dont la largeur axiale est la plus réduite est la nappe de fils d'orientation circonférentielle du bloc de travail, permettent d'améliorer remarquablement la résistance aux chocs, aux perforations et aux oxydations en résultant, de l'armature de sommet du pneumatique selon l'invention.

De préférence, le rapport d'allongement rupture entre les fils de la nappe de fils parallèles d'orientation circonférentielle du bloc de protection et les fils de la nappe de fils parallèles d'orientation circonférentielle du bloc de travail est supérieur à 1,5. Cela permet aux fils de la nappe de protection de ne pas être sous contrainte en roulage normal et ainsi d'être pleinement efficaces pour s'opposer à toute pénétration.

Avantageusement, la largeur axiale de la nappe de fils d'orientation circonférentielle du bloc de protection est comprise entre la largeur axiale de la nappe de travail la moins large et la largeur axiale de la nappe de travail la plus large.

La nappe orientée circonférentiellement du bloc de travail peut être formée de fils élastiques, présentant une courbe contrainte de traction en fonction de l'allongement relatif ayant des pentes faibles pour les faibles allongements et une pente sensiblement constante et forte pour les allongements supérieurs. Cette nappe peut aussi être formée de fils orientés circonférentiellement et coupés de manière à former des tronçons de longueur très inférieure à la circonférence de la nappe. Mais, avantageusement, pour obtenir une excellent reprise des efforts circonférentiels, cette nappe peut être constituée de fils métalliques inextensibles.

La nappe du bloc de protection peut être formée de fils métalliques élastiques ou de fils textiles tels des aramides.

On peut aussi former les deux nappes de fils parallèles d'orientation circonférentielle en fils textiles, notamment aramides.

Les caractéristiques et avantages de l'invention seront mieux compris à l'aide de la description qui suit et qui se réfère au dessin, illustrant à titre non limitatif des exemples d'exécution, et sur lequel :
- la figure 1 représente schématiquement, vu en section axiale, une armature de sommet conforme à l'invention ;
- la figure 2 représente, une variante de réalisation d'une armature de sommet conforme à l'invention.

Le pneumatique P comprend une armature de carcasse radiale 1 ancrée dans chaque bourrelet et formée de fils aramides. Cette armature de carcasse 1 est frettée par une armature de sommet 3, composée d'un bloc de travail 31 et d'un bloc de protection 32 disposé radialement extérieurement relativement au bloc de travail.

Le bloc de travail est formé radialement de l'intérieur vers l'extérieur:
- d'une première nappe de travail 311 formée de fils métalliques inextensibles orientés par rapport à la direction circonférentielle d'un angle α, égal dans ce cas à 22° ;
- puis d'une seconde nappe de travail 312 formée de fils métalliques identiques à ceux de la première nappe de travail, et faisant avec la direction circonférentielle un angle β, opposé à l'angle α et, dans le cas montré, égal audit angle α de 22°, (mais pouvant être différent dudit angle α) ; et
- d'une troisième nappe de travail 313 formée de fils métalliques inextensibles orientés circonférentiellement.

Le bloc de protection 32 est formé d'une nappe de fils métalliques élastiques orientés circonférentiellement.

La largeur axiale de la troisième nappe de travail L₃₁₃ est inférieure aux largeurs axiales des deux premières nappes de travail L₃₁₁ et L₃₁₂. En revanche, la largeur axiale de la nappe du bloc de protection L₃₂₁ est comprise entre les largeurs axiales des deux premières nappes de travail L₃₁₁ et L₃₁₂.

Le pneumatique, conforme à l'invention est maintenant comparé à un pneumatique de fabrication usuelle ayant une armature de sommet avec un bloc de travail composé d'une nappe de triangulation et de deux nappes de travail croisées, et un bloc de protection formé d'une nappe de fils métalliques élastiques orientés selon la direction de la nappe de travail adjacente.

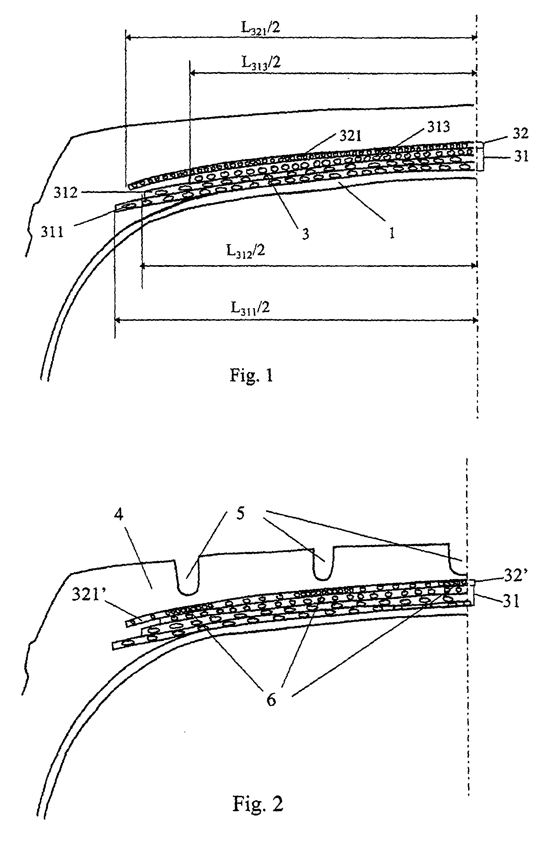

Un roulage, de ces deux types de pneumatiques, sur une piste parsemée de cailloux de grosseur adaptée et présentant des arêtes vives et coupantes, le pneumatique testé étant rendu mouillé par passage dans un bassin d'eau salée, permet de mettre en évidence le très bon comportement du pneumatique conforme à l'invention et représenté à la figure 1. A l'éclatement du pneumatique témoin, une analyse fine des deux pneumatiques a montré que le pneumatique selon l'invention avait subi deux fois moins de perforations de la bande de roulement jusqu'au bloc de protection que le pneumatique témoin.

En conséquence, contrairement à ce que l'on pouvait redouter, le fait de disposer la troisième nappe de travail 313 formée de fils d'orientation circonférentielle directement sous la nappe de protection 321 n'a pas entraîné pour cette troisième nappe une susceptibilité marquée à l'endommagement lié aux perforations et aux coupures. Au contraire le résultat de ces essais montre que l'armature de sommet du pneumatique selon l'invention est très notablement plus résistante que celle des pneumatiques usuels.

La figure 2 montre en coupe axiale une variante de réalisation du pneumatique selon l'invention. La bande de roulement 4 de ce pneumatique comprend trois rainures 5 circonférentielles. Ces rainures peuvent usuellement être en zigzag. Dans cette variante, le pas, c'est-à-dire l'espace entre les fils, de la nappe 321' du bloc de protection 32' est beaucoup plus petit dans les zones 6 sous les rainures que dans le reste de la nappe. En conséquence, la protection apportée par cette nappe 321' est renforcée dans les zones 6 sous les rainures 5, où les risques de perforation de la bande de roulement sous les plus importants. Cela permet d'adapter la protection en fonction des besoins sans augmenter la quantité de métal dans l'armature de sommet donc le poids du pneumatique.

La confection du pneumatique selon l'invention peut avantageusement être réalisée sur un noyau rigide imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection. Le pneumatique peut alors être moulé et vulcanisé comme exposé dans le brevet US 4 895 692.

Les deux nappes 313 et 321 peuvent être appliquées par enroulement d'un fil unique avec un pas constant ou variable. L'absence de conformation a l'avantage de permettre d'utiliser des fils métalliques inextensibles comme composant de la nappe de travail 313 d'orientation circonférentielle.

## Revendications

1. Pneumatique comprenant un sommet, deux flancs et deux bourrelets, une armature de carcasse (1) ancrée dans les deux bourrelets et une armature de sommet (3), ladite armature de sommet comprenant radialement de l'intérieur vers l'extérieur, un bloc de travail (31) et un bloc de protection (32), ledit bloc de travail ayant au moins deux nappes de travail (311, 312) superposées formées de fils parallèles dans chaque nappe et croisés d'une nappe à la suivante en faisant avec la direction circonférentielle des angles (α, β) compris entre 10° et 45° et une nappe (313) de fils parallèles d'orientation circonférentielle, ledit bloc de protection (32) ayant au moins une nappe (321) de fils parallèles d'allongement à la rupture supérieur à celui des fils de la nappe d'orientation circonférentielle du bloc de travail, **caractérisé en ce que** ladite nappe (313) de fils parallèles d'orientation circonférentielle est la nappe dudit bloc de travail disposée radialement le plus à l'extérieur, **en ce que** les fils parallèles de ladite nappe dudit bloc de protection ont une orientation circonférentielle et **en ce que** ladite nappe de fils parallèles d'orientation circonférentielle (313) dudit bloc de travail (32) a une largeur axiale (L₃₁₃) inférieure à la largeur axiale (L₃₁₂) de la moins large desdites nappes de travail (312) ainsi qu'à la largeur axiale de ladite nappe (321) de fils d'orientation circonférentielle dudit bloc de protection (32).

2. Pneumatique selon la revendication 1, dans lequel le rapport d'allongement rupture entre les fils de la nappe (321) de fils parallèles d'orientation circonférentielle du bloc de protection et les fils de la nappe (313) de fils parallèles d'orientation circonférentielle du bloc de travail est supérieur à 1,5.

3. Pneumatique selon l'une des revendications 1 ou 2, dans lequel ladite nappe (321) de fils d'orientation circonférentielle dudit bloc de protection a une largeur axiale comprise entre la largeur axiale de la nappe de travail la moins large (313) et la largeur axiale de la nappe de travail la plus large (311).

4. Pneumatique selon l'une des revendications 1 à 3, dont la surface radialement extérieure du sommet présente une sculpture comprenant des nervures séparées par des rainures circonférentielles (5), dans lequel ladite nappe de fils d'orientation circonférentielle du bloc de protection présente une variation axiale de pas (6) avec une densité maximale de fils disposés radialement sous lesdites rainures.

5. Pneumatique selon l'une des revendications 1 à 4, dans lequel les fils de la nappe (313) de fils parallèles d'orientation circonférentielle dudit bloc de travail sont constitués de fils métalliques inextensibles.

6. Pneumatique selon l'une des revendications 1 à 5, dans lequel les fils de la nappe (321) de fils parallèles d'orientation circonférentielle dudit bloc de protection sont constitués de fils métalliques élastiques.

7. Pneumatique selon l'une des revendications 1 à 5, dans lequel les fils de la nappe (321) de fils parallèles d'orientation circonférentielle dudit bloc de protection sont constitués de fils textiles.

8. Pneumatique selon l'une des revendications I à 4, dans lequel les fils desdites deux nappes (313, 321) d'orientation circonférentielle sont constitués d'aramide.

## Patentansprüche

1. Reifen mit einem Scheitel, zwei Flanken und zwei Wülsten, einer Karkassenbewehrung (1), die in den beiden Wülsten verankert ist, und einer Scheitelbewehrung (3), wobei die genannte Scheitelbewehrung, radial von innen nach außen, einen Arbeitsblock (31) und einen Schutzblock (32) aufweist, der genannte Arbeitsblock mindestens zwei übereinanderliegende Arbeitslagen (311, 312) aufweist, die in jeder Lage aus parallelen Drähten und von einer Lage zur folgenden überkreuz liegenden Drähten gebildet sind, wobei sie zur Umfangsrichtung Winkel (α, β) bilden, die zwischen 10° und 45° liegen, und eine Lage (313) aus Drähten, die parallel zur Umfangsrichtung verlaufen, wobei der genannte Schutzblock (32) mindestens eine Lage (321) aus parallelen Drähten mit einer Bruchdehnung hat, die höher ist als die der Drähte der Lage mit Umfangsausrichtung des Arbeitsblocks, **dadurch gekennzeichnet, daß** die genannte Lage (313) aus Drähten, die parallel zur Umfangsrichtung verlaufen, die Lage des genannten Arbeitsblocks ist, die radial am weistesten außenliegt, daß die parallelen Drähte der genannten Lage des genannten Schutzblocks eine Umfangsausrichtung haben, und daß die genannte Lage (313) aus zur Umfangsrichtung parallelen Drähten des genannten Arbeitsblocks (32) eine axiale Breite (L₃₁₃) haben, die kleiner ist als die axiale Breite (L₃₁₂) der kleinsten der genannten Arbeitslagen (312) sowie als die axiale Breite der genannten Lage (321) aus Drähten in Umfangsausrichtung des genannten Schutzblocks (32).

2. Reifen nach Anspruch 1, in welchem das Verhältnis der Bruchdehung zwischen den Drähten der Lage (321) aus parallelen Drähten in Umfangsausrichtung des Schutzblocks und den Drähten der Lage (313) aus parallelen Drähten in Umfangsausrichtung des Arbeitsblocks größer ist als 1,5.

3. Reifen nach einem der Ansprüche 1 oder 2, worin die genannte Lage (321) aus Drähten in Umfangsrichtung des genannten Schutzblocks eine axiale Breite hat, die zwischen der axialen Breite der am wenigsten breiten Arbeitslage (313) und der axialen Breite der breitesten Arbeitslage (311) liegt.

4. Reifen nach einem der Ansprüche 1 bis 3, wobei die radial äußere Fläche des Scheitels eine Profilierung aufweist, die Rippen aufweist, die durch Umfangsrillen (5) getrennt sind, worin die genannte Lage aus Drähten in Umfangsausrichtung des Schutzblocks eine axiale Variation in der Teilung (6) aufweist, mit einer maximalen Dichte der Drähte, die radial unter den genannten Rillen angeordnet sind.

5. Reifen nach einem der Ansprüche 1 bis 4, worin die Drähte der Lage (313) aus parallelen Drähten in Umfangsrichtung des genannten Arbeitsblocks aus undehnbaren Metalldrähten gebildet sind.

6. Reifen nach einem der Ansprüche 1 bis 5, worin die Drähte der Lage (321) aus parallelen Drähten in Umfangsrichtung des genannten Schutzblocks aus elastischen Metalldrähten gebildet sind.

7. Reifen nach einem der Ansprüche 1 bis 5, worin die Drähte der Lage (321) aus parallelen Drähten in Umfangsrichtung des genannten Arbeitsblocks aus Textildrähten gebildet sind.

8. Reifen nach einem der Ansprüche 1 bis 4, worin die Drähte der genannten beiden Lagen (313, 321) im Umfangsausrichtung aus Aramid gebildet sind.

## Claims

1. A tyre comprising a crown, two sidewalls and two beads, a carcass reinforcement (1) anchored in the two beads and a crown reinforcement (3), said crown reinforcement comprising radially, from the inside to the outside, a working block (31) and a protective block (32), said working block having at least two superposed working plies (311, 312) formed by cords which are parallel in each ply and are crossed from one ply to the next, forming angles (α, β) of between 10° and 45° with the circumferential direction and a ply (313) of parallel cords of circumferential orientation, said protective block (32) having at least one ply (321) of parallel cords of elongation at break greater than that of the cords of the ply of circumferential orientation of the working block, **characterised in that** said ply (313) of parallel cords of circumferential orientation is the radially outermost ply of said working block, **in that** the parallel cords of said ply of said protective block have a circumferential orientation and **in that** said ply (313) of parallel cords of circumferential orientation of said working block (32) has an axial width (L₃₁₃) less than the axial width (L₃₁₂) of the least wide of said working plies (312), and less than the axial width of said ply (321) of cords of circumferential orientation of said protective block (32).

2. A tyre according to Claim 1, in which the ratio of elongation at break between the cords of the ply (321) of parallel cords of circumferential orientation of the protective block and the cords of the ply (313) of parallel cords of circumferential orientation of the working block is greater than 1.5.

3. A tyre according to one of Claims 1 or 2, in which said ply (321) of cords of circumferential orientation of said protective block has an axial width ranging between the axial width of the least wide working ply (313) and the axial width of the widest working ply (311).

4. A tyre according to one of Claims 1 to 3, the radially outer surface of the crown of which has a sculpture comprising ribs separated by circumferential grooves (5), in which said ply of cords of circumferential orientation of the protective block has an axial variation of pitch (6) with a maximum density of cords arranged radially under said grooves.

5. A tyre according to one of Claims 1 to 4, in which the cords of the ply (313) of parallel cords of circumferential orientation of said working block consist of inextensible metal cords.

6. A tyre according to one of Claims 1 to 5, in which the cords of the ply (321) of parallel cords of circumferential orientation of said protective block consist of elastic metal cords.

7. A tyre according to one of Claims 1 to 5, in which the cords of the ply (321) of parallel cords of circumferential orientation of said protective block consist of textile cords.

8. A tyre according to one of Claims 1 to 4, in which the cords of said two plies (313, 321) of circumferential orientation consist of aramid.
